**Europäisches Patentamt**

**European Patent Office**

**Office européen des brevets**

(19)

(11) Veröffentlichungsnummer : **0 427 735 B1**

(12) ## EUROPÄISCHE PATENTSCHRIFT

(45) Veröffentlichungstag der Patentschrift :
**28.10.92 Patentblatt 92/44**

(51) Int. Cl.$^5$ : **B01L 3/00,** G01N 21/03,
G01N 21/25

(21) Anmeldenummer : **89907135.1**

(22) Anmeldetag : **19.06.89**

(86) Internationale Anmeldenummer :
**PCT/EP89/00685**

(87) Internationale Veröffentlichungsnummer :
**WO 90/01370 22.02.90 Gazette 90/05**

(54) **MIKROTITRATIONSPLATTE UND VERFAHREN ZUR QUANTITATIVEN BESTIMMUNG DES ZUSTANDES ODER VON ZUSTANDSÄNDERUNGEN VON INHOMOGENEN PROBEN.**

(30) Priorität : **01.08.88 AT 1938/88**

(43) Veröffentlichungstag der Anmeldung :
**22.05.91 Patentblatt 91/21**

(45) Bekanntmachung des Hinweises auf die
Patenterteilung :
**28.10.92 Patentblatt 92/44**

(84) Benannte Vertragsstaaten :
**AT BE CH DE FR GB IT LI NL SE**

(56) Entgegenhaltungen :
**WO-A-83/00047**
**US-A- 3 885 879**
**US-A- 4 263 256**

(73) Patentinhaber : **SLT LABINSTRUMENTS
GESELLSCHAFT M.B.H.
Untersbergstrasse 1
A-5082 Grödig (AT)**

(72) Erfinder : **RUBENZER, Peter
Kräutlerweg 24a
A-5020 Salzburg (AT)**
Erfinder : **STEINDL, Franz
Koppstrasse 69
A-1160 Wien (AT)**

(74) Vertreter : **Torggler, Paul, Dr. et al
Wilhelm-Greil-Strasse 16
A-6020 Innsbruck (AT)**

EP 0 427 735 B1

**Beschreibung**

Die Erfindung bezieht sich auf ein Verfahren zur quantitativen Bestimmung des Zustandes oder von Zustandsänderungen von inhomogenen Proben mit einer flüssigen und einer oder mehreren festen Phasen, wobei die Proben in Reaktionsgefäße mit transparenter Oberfläche, die beispielsweise in Form einer Mikrotitrationsplatte angeordnet sind, gegeben und anschließend durch einen Lichtstrahl geführt und mittels vertikaler Photometrie ausgewertet werden.

Weiters bezieht sich die Erfindung auf eine Mikrotitrationsplatte zur Verwendung in einem derartigen Verfahren mit mehreren in Reihen angeordneten Reaktionsgefäßen mit transparenten Bodenflächen, die rechteckige Einfüllöffnungen und rechteckige Bodenflächen aufweisen und vorzugsweise keilstumpfförmig oder pyramidenstumpfförmig sind.

Mikrotestsysteme, basierend auf Mikrotitrationsplatten, werden heute sehr universell für Testzwecke aller Art, beispielsweise Blutuntersuchungen verwendet. Ihre Vorteile liegen in der Miniaturisierung und Automatisierbarkeit der einzelnen Arbeits- und Meßvorgänge.

Die Mikrotestsysteme werden auch bevorzugt für die Kultur von Zellen verwendet. Für die Erfassung des Zellenwachstums sind jedoch die bisher bei anderen Testverfahren in Mikrotitrationsplatten angewandten photometrischen Meßverfahren nicht brauchbar.

Bei den bisher bekannten photometrischen Messungen in Mikrotitrationsplatten wird ein Lichtstrahl vertikal über einen oder mehrere Teilausschnitte des Reaktionsgefäßbodens geschickt. Die beim Durchdringen des Lichtstrahls veränderte Intensität desselben wird als Parameter für die quantitative Messung herangezogen. Der Lichtstrahl durchdringt immer nur Teilausschnitte des Reaktionsgefäßes und erfaßt damit immer nur Bruchteile des Inhaltes. Eine repräsentative, quantitative Erfassung des Gesamtinhaltes kann daher nach diesem Prinzip nur erreicht werden, wenn der Inhalt homogen über das Reaktionsgefäß verteilt ist, d. h., wenn die zu messenden Substanzen gelöst sind.

Proben, die neben einer flüssigen Phase noch eine weitere feste Phase, wie Zellen, Partikel und dergleichen, enthalten, oder bei welchen eine feste Phase am Boden des Reaktionsgefäßes angereichert ist, sind inhomogen. Die für homogene Proben bewährte photometrische Meßtechnik führt bei inhomogenen Proben zu keinen repräsentativen Ergebnissen, und ist daher für die quantitative Erfassung von Zuständen oder Zustandsänderungen von inhomogenen Proben nicht geeignet.

Will man dennoch nach der bekannten Methode eine quantitative Erfassung erreichen, so ist es notwendig, den Inhalt der Reaktionsgefäße vor der Messung homogen zu mischen, und danach direkt oder nach Entnahme einer repräsentativen Probe extern zu messen. Sowohl das Durchmischen als auch die Entnahme einer Probe bedeuten Eingriffe in das System, die zu einer reversiblen oder irreversiblen Störung desselben führen. Für viele Problemstellungen ist es vorteilhaft, in Mikrotitrationssystemen quantitative Veränderungen inhomogener Systeme zu erfassen, ohne daß dabei in das System eingegriffen werden muß. Kinetische Veränderungen biologischer Systeme (wie z.B. das Wachsen oder Absterben von Zellen), oder die quantitative Auswertung von Testsystemen mit Partikeln, Aggregaten etc. sind Vorgange, die in Forschungs- und Screeningprogrammen in extrem großer Anzahl durchgeführt werden müssen. Auch wenn derartige Arbeitsvorgänge miniaturisiert in Mikrotitrationssystemen durchgeführt werden, und damit einer gewissen Automatisierung zugänglich sind, muß die Auswertung fast ausschließlich in mühevoller manueller Arbeit durch Mikroskopie oder nach Entnahme einer Teilprobe in diskreten Analysen erfolgen.

Eine direkte quantitative photometrische Auswertung ohne Eingriff in das System, ist bisner aufgrund der gegebenen Innomogenität nicht moglich.

Daraus ergeben sich u.a. folgende Nachteile:

1. Die Auswertung durch Mikroskopieren ist subjektiv und birgt damit erhebliche Fehlerrisiken.

2. Das Mikroskopieren von Proben in Mikrotestsystemen, beispielsweise in Mikrotitrationsplatten, ist zeitaufwendig und mit angemessenem Aufwand nicht automatisierbar.

3. Durch die Mikroskopierarbeit wird die Screeningkapazität eines Labors stark limitiert.

4. Da die quantitative Zustandsveränderung nicht objektiv meßbar ist, ist ein objektives Ermitteln z. B. der Wachstumsrate von Zellen nicht möglich.

5. Da die Auswertergebnisse mangels automatisiertem Meßvorgang nicht automatisch erfaßt werden können, besteht erhöhtes Verwechslungsrisiko; eine positive Probenidentifikation während des Testablaufes ist nicht möglich.

Zustandsänderungen in inhomogenen Proben können sowohl durch biologisch/biochemische als auch durch physikalische Vorgänge verursacht sein. Die Zustandserfassung soll erfindungsgemäß direkt im Reaktionsgefäß erfolgen, ohne daß der jeweilige Zustand oder Reaktionsverlauf im Reaktionsgefäß beeinflußt wird. Die Erfindung soll daher die quantitative Erfassung fester Phasen, wie z. B. von Zellkulturen, Fällungsreaktionen, Agglutinationsreaktionen und dergleichen ermöglichen. Die dabei verwendeten Reaktionsgefäße sollen in Volumen und Anordnung den bekannten Mikrotitrationsplatten entsprechen.

Gemäß der WO 83/00047 ist ein Verfahren bekannt, bei dem mittels herkömmlicher Photometrie die Dichte der am küvetten Boden befindlichen Substanz gemessen wird. Dabei wird die gesamte Bodenfläche ausgeleuchtet.

Die US-A-42 63 256 zeigt Reaktionsgefäße mit rechteckiger Bodenfläche, jedoch wird gemäß dieser Patentschrift die rechteckige Bodenfläche bei der Bestimmung des Zustandes der Proben überhaupt nicht genützt. Die Durchleuchtung der Reaktionsgefäße erfolgt laut der US Patentschrift horizontal.

Die erfindungsgemäße Aufgabe wird dadurch gelöst, daß Reaktionsgefäße mit rechteckiger Bodenfläche verwendet werden und mit einem Lichtstrahl oder mehreren Lichtstrahlen die gesamte Bodenfläche der Reaktionsgefäße in mehreren gegeneinander abgegrenzten beschnitten ausgeleuchtet und ausgewertet wird, wobei die Lichtstrahlen von unten durch das Reaktionsgefäß geführt werden.

Mit dem erfindungsgemäßen Verfahren kann die Fläche eines Zellrasens, seine Dichte und seine Lage ermittelt werden. Auf diese Art ist beispielsweise feststellbar, ob sich mehrere voneinander unabhängige Zellrasen im Reaktionsgefäß befinden.

Erfindungsgemäß ist vorgesehen, daß der im Querschnitt runde Lichtstrahl vor Eintritt in das Reaktionsgefäß durch eine Blende mit einer rechteckigen Öffnung geführt und dadurch geformt wird, oder daß mittels einer Vielzahl von eng nebeneinander angeordneten im Querschnitt runden Lichtleitern ein eine rechteckige Fläche vollständig ausleuchtender Lichtstrahl zusammengesetzt wird.

Die zur Verwendung mit dem erfindungsgemäßen Verfahren geeigneten Mikrotitrationsplatten sind dadurch gekennzeichnet, daß sie an ihrer unteren Außenfläche derart bedruckt oder abgedeckt sind, daß die verbleibende transparente Fläche in ihren Maßen der inneren Bodenfläche der Reaktionsgefäße entspricht, und zu dieser kongruent liegt.

Nachfolgend wird die Erfindung anhand der Figuren der beiliegenden Zeichnungen eingehend beschrieben.

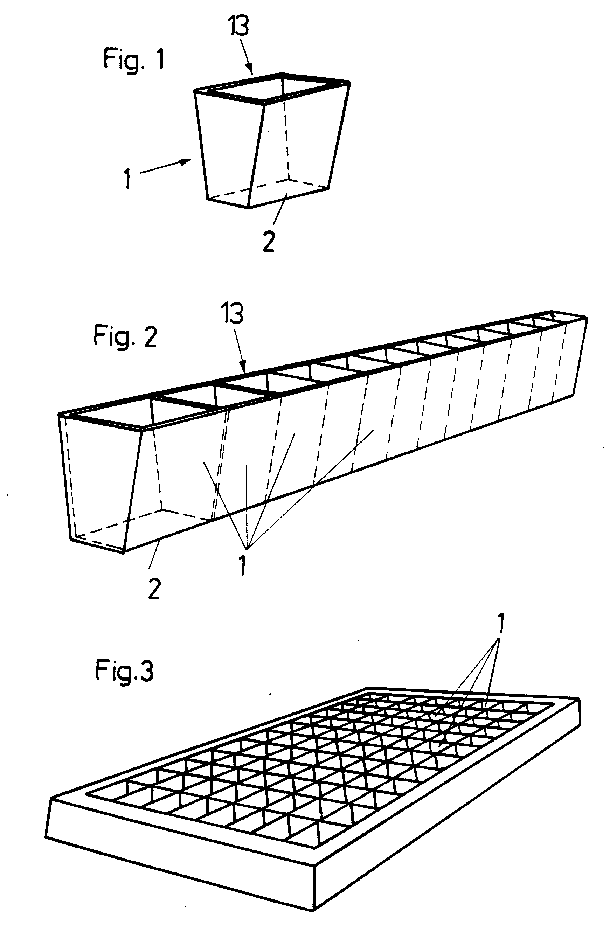

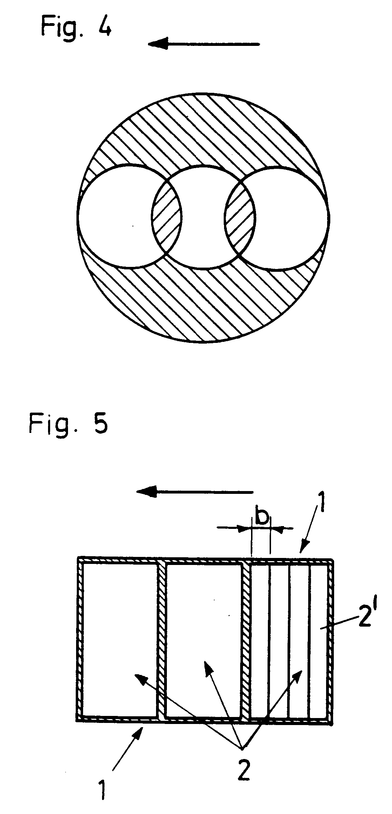

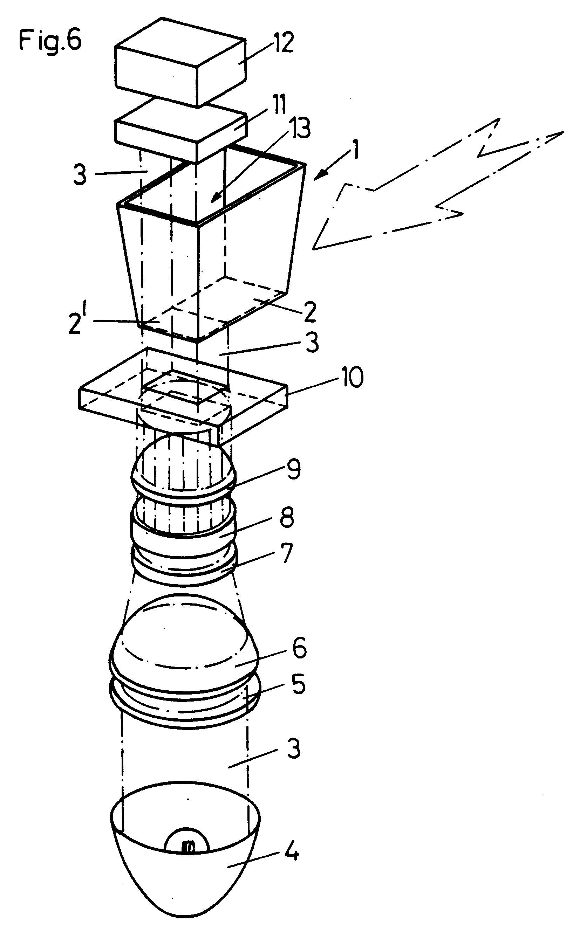

Die Fig. 1 zeigt schematisch ein erfindungsgemäßes Reaktionsgefäß, die Fig. 2 zeigt erfindungsgemäße Reaktionsgefäße, die in einer Reihe angeordnet sind, die Fig. 3 zeigt schaubildlich erfindungsgemäße Reaktionsgefäße, die in der Form einer Mikrotitrationsplatte angeordnet sind, die Fig. 4 zeigt schematisch die Meßstrahlanordnung bei einem herkömmlichen Photometrieverfahren, die Fig. 5 zeigt schematisch den erfindungsgemäßen Meßvorgang, und die Fig. 6 zeigt das Schema einer Vorrichtung des erfindungsgemäßen Verfahrens.

Das Reaktionsgefäß 1 besitzt vorzugsweise die Form eines Keilstumpfes oder eines auf den Kopf gestellten Pyramidenstumpfes, beispielsweise mit einer rechteckigen Einfüllöffnung 13 von 8 x 8 mm, einer inneren Bodenfläche 2 von 7 x 3 mm und einer Tiefe von 12 mm.

Durch diese spezielle Gefäßform wird erreicht, daß sich nicht in Suspension gehaltene Teilchen absetzen und sich an der flachen Bodenfläche 2 des Reaktionsgefäßes 1 ansammeln. Zumindestens die Bodenfläche 2 des Reaktionsgefäßes 1 besteht aus transparentem Material mit guten optischen Eigenschaften.

Die photometrische Auswertung des Inhaltes des Reaktionsgefäßes 1 erfolgt derart, daß die gesamte Bodenfläche 2 von einem rechteckig geformten Lichtstrahl 3 erfaßt wird.

Der Lichtstrahl 3 kann einen Querschnitt in Größe der inneren Bodenfläche 2 des Reaktionsgefäßes 1 haben oder einen Querschnitt, dessen längere Seite der Breite und dessen Breite b einem Bruchteil der Länge der inneren Bodenfläche 2 des Reaktionsgefäßes 1 entspricht.

Durch das Messen mit einem Lichtstrahl 3, der derart geformt ist, kann die gesamte Bodenfläche 2 des Reaktionsgefäßes 1 als Meßfläche erfaßt werden (wie in Fig. 5 dargestellt).

Dabei kommt es zu keiner Überlappung von Meßteilflächen 2'.

Bei dieser Art der Erfassung des gesamten "Gesichtsfeldes" der Bodenfläche 2 des Reaktionsgefäßes 1 ist es für die quantitative Auswertung unerheblich, ob die feste Phase homogen oder inhomogen auf dem Boden des Reaktionsgefäßes 1 verteilt ist.

Die Kombination aus der spezifischen Form des Reaktionsgefäßes 1 bzw. der Mikrotitrationsplatte und dem beschriebenen Meßverfahren ermöglicht nicht nur die quantitative, automatische photometrische Auswertung inhomogener Proben, sondern ermöglicht darüber hinaus eine wesentlich höhere Sensitivität bei der Erfassung niedriger Konzentrationen der festen Phase. Die Strukturen der festen Phase (z.B. Zellkulturen) werden bei diesem Meßvorgang nicht gestört. Die Reproduzierbarkeit der Meßwerte wird verbessert.

In der Fig. 6 sind schematisch die Teile der Vorrichtung gezeigt. Das Reaktionsgefäß 1 wird in der Richtung des Pfeiles durch die Vorrichtung geführt. Von einer Lampe 4 wird ein Lichtstrahl 3 einem Wärmefilter 5, einer Kondensorlinse 6, einem Interferenzfilter 7, einer Phaseroptik 8, einer Linse 9 und schließlich einer Rechteckblende 10 zugeführt. Durch die Rechteckblende 10 erhält der Lichtstrahl 3 bzw. das Lichtstrahlenbündel 3 eine rechteckige Abgrenzung. Anschließend wird der Lichtstrahl 3 durch das Reaktionsgefäß 1 und zu einer Photodiode 11 geführt. In der Fig. der Zeichnung ist noch ein AD-Wandler mit 12 bezeichnet.

Durch das erfingungsgemäße Verfahren wird eine objektive und störungsfreie quantitative Zellzahl und Zellwachstumsbestimmung mit vernünftiger Detektionsgrenze ermöglicht und automatisierbar, wobei Reaktionsgefäße 1 verwendet werden, die die Vorteile der bekannten Mikrotitrationsplatte bieten.

## Patentansprüche

1. Mikrotitrationsplatte zur Verwendung in einem Verfahren nach einem der Ansprüche 2 bis 4 mit mehreren in Reihen angeordneten Reaktionsgefäßen (1) mit transparenten Bodenflächen (2), die rechteckige Einfüllöffnungen (13) und rechteckige Bodenflächen (2) aufweisen und vorzugsweise keilstumpfförmig oder pyramidenstumpfförmig sind, dadurch gekennzeichnet, daß sie an ihrer unteren Außenfläche derart bedruckt oder abgedeckt ist, daß die verbleibende transparente Fläche in ihren Maßen der inneren Bodenfläche (2) der Reaktionsgefäße (1) entspricht, und zu dieser kongruent liegt.

2. Verfahren zur quantitativen Bestimmung des Zustandes oder von Zustandsänderungen von inhomogenen Proben mit einer flüssigen und einer oder mehreren festen Phasen, wobei die Proben in Reaktionsgefäße (1) mit transparenter Bodenfläche (2), die beispielsweise in Form einer Mikrotitrationsplatte angeordnet sind, gegeben und anschließend durch einen Lichtstrahl (3) geführt und mittels vertikaler Photometrie ausgewertet werden, dadurch gekennzeichnet, daß Reaktionsgefäße (1) mit rechteckiger Bodenfläche (2) verwendet werden und mit einem Lichtstrahl (3) oder mehreren Lichtstrahlen (3) die gesamte Bodenfläche (2) der Reaktionsgefäße (1) in mehreren gegeneinander abgegrenzten Abschnitten (2') ausgeleuchtet und ausgewertet wird, wobei die Lichtstrahlen (3) von unten durch das Reaktionsgefäß (1) geführt werden.

3. Verfahren nach Anspruch 2, dadurch gekennzeichnet, daß der im Querschnitt runde Lichtstrahl (3) vor Eintritt in das Reaktionsgefäß (1) durch eine Blende (10) mit einer rechtekkigen Öffnung geführt und dadurch geformt wird.

4. Verfahren nach Anspruch 3, dadurch gekennzeichnet, daß mittels einer Vielzahl von eng nebeneinander angeordneten im Querschnitt runden Lichtleitern ein eine rechteckige Fläche vollständig ausleuchtender Lichtstrahl (3) zusammengesetzt wird.

5. Verfahren nach Anspruch 2, dadurch gekennzeichnet, daß Reaktionsgefäße (1) eingesetzt werden, die die Form eines Keilstumpfes oder eines auf den Kopf gestellten pyramidenstumpfes aufweisen.

## Claims

1. A microtitration plate for use in a process according to one of claims 2 to 4 comprising a plurality of reaction vessels (1) arranged in rows, with transparent bottom surfaces (2), which have rectangular filling openings (13) and rectangular bottom surfaces (2) and which are preferably of a truncated wedge shape or a truncated pyramid shape, characterised in that at their lower outside surface they are printed upon or covered in such a way that the remaining transparent surface corresponds in its dimensions to the inside bottom surface (2) of the reaction vessels (1) and is congruent with respect thereto.

2. A process for quantitatively determining the state or changes in state of inhomogeneous samples with a liquid and one or more solid phases, wherein the samples are introduced into reaction vessels (1) with a transparent bottom surface (2), which are arranged for example in the form of a microtitration plate, and are then guided through a light beam (3) and evaluated by means of vertical photometry, characterised in that reaction vessels (1) with a rectangular bottom surface (2) are used and the entire bottom surface (2) of the reaction vessels (1) is illuminated and evaluated in a plurality of portions (2') which are delimited relative to each other by a light beam (3) or a plurality of light beams (3), the light beams (3) being guided from below through the reaction vessel (1).

3. A process according to claim 2 characterised in that, before passing into the reaction vessel (1), the light beam (3) which is of round cross-section is guided through an aperture member (10) having a rectangular opening and is shaped thereby.

4. A process according to claim 3 characterised in that a light beam (3) which completely illuminates a rectangular surface is composed by means of a plurality of light guides which are of round cross-section and which are disposed in closely juxtaposed relationship.

5. A process according to claim 2 characterised by using reaction vessels (1) which are in the shape of a truncated wedge or an inverted truncated pyramid.

## Revendications

1. Plaque de microtitrage destinée à être utilisée dans un procédé selon l'une des revendications 2 à 4 comprenant plusieurs réacteurs (1) qui sont disposés en rangées, présentent des surfaces de fond (2) transparentes, des ouvertures de remplissage (13) rectangulaires et des surfaces de fond (2) rectangulaires et sont de préférence en forme de clavette tronquée ou de pyramide tronquée, caractérisée en ce qu'elle est imprimée ou recouverte sur sa surface extérieure inférieure de telle manière que la surface transparente restante corresponde dans ses dimensions à la surface de fond (2) intérieure du réacteur (1) et lui soit congrue.

2. Procédé de détermination quantitative de l'état ou de changements d'état d'échantillons inhomogènes avec une phase liquide et une ou plusieurs phases solides, les échantillons étant placés dans des réacteurs (1) à surface de fond (2) transparente qui sont agencés par exemple sous la forme d'une plaque de microtitrage, puis étant traversés par un rayon lumineux (3) et analysés par photométrie verticale, caractérisé en ce que l'on utilise des réacteurs (1) ayant une surface de fond (2) rectangulaire et que l'ensemble de la surface de fond (2) du réacteur (1) divisé en plusieurs parties (2') délimitées les unes par rapport aux autres est éclairé par un rayon lumineux (3) ou plusieurs rayons lumineux (3) et est analysé, les rayons lumineux (3) étant guidés par le bas à travers le réacteur (1).

3. Procédé selon la revendication 2, caractérisé en ce qu'avant d'entrer dans le réacteur (1), le rayon lumineux (3) de section transversale ronde passe à travers un diaphragme (10) à ouverture rectangulaire et est ainsi formé.

4. Procédé selon la revendication 3, caractérisé en ce qu'un rayon lumineux (3) éclairant entièrement une surface rectangulaire est composé au moyen d'une pluralité de fibres optiques de section transversale ronde disposées très près les unes des autres.

5. Procédé selon la revendication 2, caractérisé en ce que l'on utilise des réacteurs (1) qui présentent la forme d'une clavette tronquée ou d'une pyramide tronquée renversée.

Fig. 1

Fig. 2

Fig. 3

Fig. 4

Fig. 5

Fig.6